# FASCICULE DE BREVET EUROPEEN

(11) **EP 1 494 166 B1**
(45) Date de publication et mention de la délivrance du brevet: **28.03.2012**
(21) Numéro de dépôt: 04291911.8
(22) Date de dépôt: 17.11.1992
(51) Int. Cl.: G06K 19/06, G09B 29/10

(54) **Système d'information géographique et carte portant une représentation graphique pour la mise en oeuvre dans un tel systèm**
Geographisches Informationssystem und Karte mit graphischer Darstellung für die Anwendung in einem solchen System
Geographical information system and map carrying a graphical representation for application in such a system

(30) Priorité: 22.11.1991 FR 9114415
(43) Date de publication de la demande: 05.01.2005
(62) Demande divisionnaire de: 92403082.8
(73) Titulaire: Purple Eyes, 92312 Sevres (FR)
(72) Inventeur: Lamoure, Jacques, 92190 Meudon (FR)
(74) Mandataire: Novagraaf Technologies

(56) Documents cités:
- EP-A- 0 439 682
- WO-A-89/06017
- DE-A1- 3 911 702
- US-A- 4 926 035

## Description

La présente invention concerne de façon générale les systèmes d'information géographique et plus particulièrement les cartes du type portant une représentation graphique d'informations cartographiques, décomposée en un grand nombre de zones élémentaires auxquelles sont associés respectivement un grand nombre d'index.

A l'heure actuelle, on utilise en cartographie deux approches qui s'ignorent mutuellement dans une large mesure.

L'approche la plus ancienne, constituée par l'utilisation de cartes portant une représentation graphique, reste très largement utilisée, aussi bien pour les applications professionnelles que pour les applications de masse. Les cartes donnent une information globale directement accessible et familière à tous les utilisateurs potentiels. Elles restent maniables jusqu'à des formats importants, de l'ordre du m². Lorsqu'elles sont établies par des techniques d'impression modernes, maintenant bien maîtrisées, elles permettent d'atteindre une finesse de trait très élevée : beaucoup de cartes disponibles à bas prix sont réalisées en polychromie par superposition de trames constituées chacune par une matrice de points au pas de 100 µm ou moins (jusqu'à 25 µm), avec une précision de positionnement des points d'environ 10 µm.

En contrepartie de ces avantages, la carte traditionnelle à représentation graphique présente des limitations. En particulier, la quantité d'informations utiles que l'on peut inscrire sur une carte sans dégrader sa lisibilité est limitée. Cela conduit souvent à reporter la majeure partie des informations dans une annexe, c'est-à-dire à constituer un atlas. Le texte et l'information graphique sont raccordés généralement l'un à l'autre par un simple carroyage dont chaque carré est identifié, par un couple lettre-chiffre ou par un nombre. Ce carroyage ne donne qu'une indication grossière et oblige deplus à se reporter à des indications données en marge de la carte (voir document FR-A-2 639 452).

L'approche informatique de la représentation géographique a jusqu'ici essentiellement consisté à définir une image point par point, sous forme d'un tableau, dans une mémoire. Même si on utilise des algorithmes de représentation sous forme simplifiée, l'information nécessaire exige de très gros espaces en mémoire, pouvant aller jusqu'à plusieurs centaines de millions d'octets pour une seule carte. De plus, les dispositifs d'affichage visuel existants sont très loin de donner la même résolution que les cartes graphiques traditionnelles. Un moniteur professionnel à haute résolution affiche une image sous forme de pixels assimilables chacun à un carré d'environ 300 µm de côté.

On connaît en outre, par l'US-A-4 420 682, une carte géographique à laquelle est associée une grille définie selon un repère octogonal. Chaque coordonnée de la carte est codée au moyen de codes-barres, un appareil de lecture étant à même de lire automatiquement chacune de ces coordonnées.

L'US-A-4 926 035 enseigne l'utilisation de motifs de points élémentaires d'impression d'une imprimante matricielle, pour coder de l'information alpha numérique sous forme de "bits" et d'"octets".

Le document WO89/06017 divulgue un procédé de lecture de pages de données sur une surface comprenant des données.

L'US-A-4 420 682 se réfère à la référence entre des données enregistrées dans un code à barres et une base de données.

La présente invention vise à fournir une carte du type ci-dessus défini utilisable dans un système d'information géographique pour combiner les qualités graphiques de la carte traditionnelle avec les avantages dûs à l'adressage électronique d'une base de données, et cela sans dégrader la lisibilité de la carte.

Pour cela, chaque index comprend un groupement de points porté sur la carte à proximité de la zone élémentaire associée et constituant un code spécifique de ladite zone, l'ensemble des index constituant une trame de localisation couvrant ladite représentation graphique et superposée à celle-ci, chaque groupement de points pouvant être lu par des moyens de lecture optique coopérant avec un système informatique comportant un support de données adressable au moyen desdits index.

Chaque index de localisation sert de clé d'accès à des informations qui ne sont pas portées sur la carte, peuvent différer selon la destination de la carte et sont susceptibles d'être aisément mises à jour. Tout le texte d'un atlas, toutes les relations logiques et topologiques, toutes les formules de calculs peuvent être conservés sur un support informatique de données appartenant à un calculateur d'architecture classique, éventuellement au format de poche. En effet, le volume de mémoire est très réduit puisque le calculateur est dispensé de toutes les fonctions graphiques et des stockages les plus volumineux.

L'adressage de lecture dans le support informatique peut s'effectuer de façon simple à l'aide de moyens de lecture optique qu'il suffit de poser sur la carte à l'emplacement où des renseignements sont recherchés. Ces moyens de lecture peuvent se limiter à un crayon optique ayant un champ d'analyse représentant 2 à 5 fois, dans chaque direction, l'encombrement d'un index. Bien que divers modes de codage soient possibles, il semble particulièrement intéressant d'utiliser un index constitué par un bloc rectangulaire de points imprimés suivant plusieurs lignes de même longueur. Ces lignes sont avantageusement séparées par des lignes vides et il est également avantageux de ne coder qu'un pixel sur deux de la trame dans une ligne, le pixel intermédiaire restant vide. Par ailleurs, un bloc sur deux est laissé vide, les blocs de codage constituant alors une trame discontinue tel qu'un damier qui facilite le repérage et le décodage du bloc le mieux centré dans le champ d'analyse du crayon, au cas où plusieurs blocs y apparaissent.

On connaît déjà de nombreuses encres sécuritaires qui ont une réponse, c'est-à-dire une brillance, très faible lorsqu'elles sont éclairées en lumière visible et qui ont en revanche une réponse (réflectivité ou fluorescence) forte dans une raie de spectre déterminée lorsqu'elles sont éclairées par une lumière située hors du spectre visible, généralement dans l'ultraviolet. Le crayon de lecture comporte alors des moyens d'illumination locale de la carte par une lumière d'excitation de l'encre sécuritaire et un filtre destiné à isoler la longueur d'onde de réponse de l'encre.

L'invention sera mieux comprise à la lecture de la description qui suit de modes particuliers de réalisation, donnés à titres d'exemples non limitatifs, et se réfère aux dessins qui l'accompagnent, dans lesquels :
La figure 1 est une représentation, à très grande échelle pour faire apparaître le tramage, d'un fragment de carte géographique traditionnelle le long d'une côte (les couleurs cyan et jaune étant respectivement représentées par des points quadrillés et des points vides).
La figure 2 montre schématiquement une représentation possible du code 16384 à l'aide d'un bloc de 10 x 10 pixels, à échelle très agrandie.
La figure 3 montre la représentation de quelques chiffres dans le code "trois parmi cinq" utilisé pour la représentation de la figure 2.
La figure 4 montre, à échelle agrandie, une région dans laquelle la trame de localisation présente une succession d'index en damier.
La figure 5 représente, sans agrandissement, une portion de carte à laquelle est superposée la trame de localisation selon l'invention.
La figure 6 est une variante de la figure 2.

Les cartes géographiques traditionnelles sont constituées de matrices de points répartis suivant une trame régulière. Dans le cas fréquent des cartes en tétrachromie, on utilise trois trames de couleur, cyan (pour les zones d'eau), verte (pour la végétation), jaune (pour les zones désertiques) dont la superposition permet des teintes supplémentaires, et une trame noire, notamment pour les inscriptions.

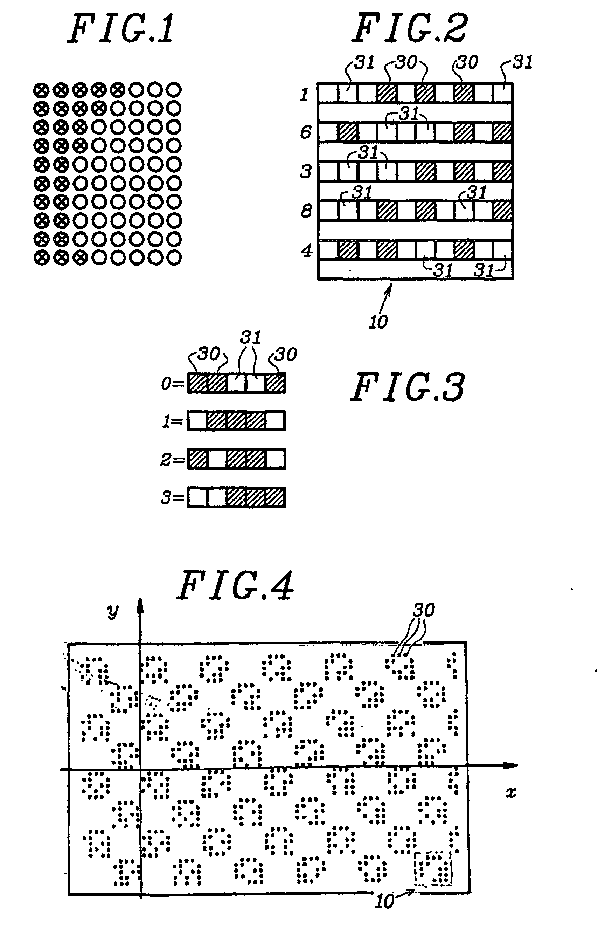

Dans le processus classique d'imprimerie, chaque trame est matérialisée sous forme d'un masque sur un film photograhique de transparence variable suvant les points, ou typon. La figure 1 montre, à titre d'exemple, un fragment de carte, très agrandi pour faire apparaître les points de la trame. De part et d'autre du rivage dans une zone désertique, les points sont cyan et jaune.

Il existe de nombreuses autres méthodes de fabrication de cartes, dont certaines mieux adaptées à des applications particulières. On peut notamment imprimer les cartes à l'aide d'une imprimante à jet d'encre ou électrostatique, surtout lorsque des indications sont fréquemment modifiées en vue de les adapter à une mission particulière. L'invention est également applicable au cas d'une représentation graphique originellement continue, mais ultérieurement tramée (photo aérienne par exemple). Dans le cas des photographies numériques issues par exemple des scanneurs aéroportés ou des satellites d'observation et reproduites grâce à des photo-restitueurs, l'invention s'applique particulièrement bien grâce à une incrustation de la trame de localisation directement dans les fichiers numériques, avant restitution.

Pour mettre en oeuvre l'invention, on superpose, aux points de représentation graphique, des codes disjoints constitués sur une trame qui est superposée aux indications graphiques. Les processus d'imprimerie classiques permettent sans difficulté d'imprimer des points de 50 à 100 µm de diamètre localisés à mieux que 10 µm près à l'intérieur d'un motif. On peut notamment utiliser un motif carré d'environ 1 millimètre x 1 millimètre constitué de points d'environ 100 µm de diamètre. Pour faciliter le repérage et le décodage, il est avantageux d'adopter un motif constitué de lignes de points de codage séparés par des lignes vides, chaque emplacement destiné à un point de codage étant séparé des emplacements adjacents par un espace vide.

Dans le cas envisagé plus haut d'un motif de 1 millimètre x 1 millimètre, cela conduit à disposer de cinq lignes ayant chacune cinq emplacements de codage et cinq espaces. On peut notamment utiliser un code binaire d'identification des chiffres de 0 à 9 du type "3 parmi 5", indiqué en figure 3, comprenant trois emplacements de codage 30 sur lesquels est disposé un point, et deux emplacements de codage 31 dépourvus de point. Les chiffres ainsi codés sont indiqués sur la figure 3, à gauche de chaque ligne. L'appellation "3 parmi 5" couvre le cas inverse où les trois emplacements 30 sont laissés vides, et les deux emplacements 31 comportent un point. Ce code a l'intérêt de rendre facile la localisation d'un index, du fait que chaque ligne comporte le même nombre de points ayant une même valeur radiométrique, c'est-à-dire une même intensité lumineuse dans la couleur dans laquelle ils sont représentés. La figure 2 montre un tel index 10 où, pour chaque ligne de codage, les deux emplacements de codage vides 31 ont la même brillance que les points de trame n'appartenant pas à un index et relatifs à la trame de représentation graphique de la carte, tandis que les emplacements de codage 30 portant les points de codage ont une brillance supérieure. Dans l'exemple de la figure 2, l'index 16 384 est représenté sur un motif à cinq lignes "actives" et cinq emplacements par ligne. Cinq lignes par motif suffisent pour coder 100 000 positions.

L'index de la figure 2 est donc construit à partir d'une matrice élémentaire de pixels composant une matrice de plus grandes dimensions, laquelle constitue la face photosensible d'un crayon de lecture optique, les points disposés sur la matrice élémentaire réalisant un codage binaire de certains pixels actifs de cette matrice.

On notera que l'index carré de la figure 2 est sensiblement isotrope, les points 30 étant répartis approximativement dans toutes les directions autour d'un centre de l'index, ce qui ressort aussi de l'observation des différents index 10 de la figure 4 : cet agencement permet de réaliser un codage quasi ponctuel d'une carte. A l'inverse, un index ayant une forme aussi anisotrope qu'une ligne de points, serait moins approprié au codage recherché. D'une manière plus générale, une matrice comportant un nombre voisin de lignes et de colonnes sera considérée comme sensiblement isotrope.

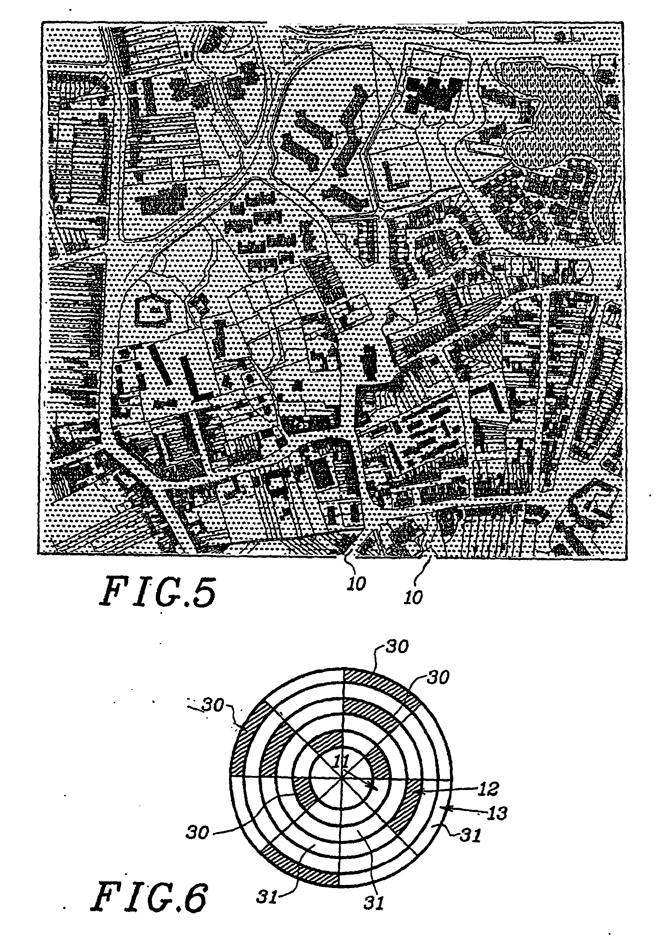

Un autre exemple d'index isotrope est représenté sur la figure 6 où les "lignes" actives sont ici des cercles concentriques 11 à 13, séparés les uns des autres par des cercles inactifs, les points 30 et les vides 31 correspondant à ceux de la figure 2 étant repérés.

On notera que la densité des points sur l'index de la figure 2 est faible puisque celui-ci comporte quinze points sur cent pixels. Ce choix contribue à rendre peu visible à l'oeil nu la trame de localisation sur la carte. D'une manière plus générale, il faut entendre par "densité faible", une densité inférieure à 20 points sur cent pixels dans le cas d'une trame de codage visible à l'oeil nu et inférieure à 50 points sur cent pixels dans le cas d'une trame de codage invisible à l'oeil nu.

Dans le cas de l'utilisation d'une encre sécuritaire, non visible par l'utilisateur, on ne dégrade pas l'aspect de la carte ; les index sont faciles à isoler à l'aide d'un lecteur ; on peut directement superposer chaque index au point qu'il concerne.

Dans les zones de la carte où les index différents sont très nombreux, chaque index peut être imprimé une seule fois exactement au point concerné. Dans la majorité des cas, les blocs codent le couple de coordonnées cartésiennes de leur emplacement ; ainsi, tous les blocs de la trame de localisation indiquent un code différent.

Pour faciliter encore le repérage et le décodage du motif le mieux centré dans le champ d'analyse des moyens de lecture optique, il est possible de ne tramer qu'un bloc sur deux et de disposer les blocs tramés en un damier rectangulaire et régulier comme le montre la figure 4. Les blocs peuvent au surplus être indexés en adoptant, comme schéma d'indexation des blocs, une courbe ayant la propriété de remplir tout le carré et donc d'autoriser la définition d'un point avec un seul paramètre. Parmi ces courbes, on peut notamment citer la courbe de Hilbert dont une description pourra être trouvée dans l'article "Fractals et dynamique des itérations", Claude BREZINSKI, AFCET/INTERFACES No 88, février 1990, page 3.

On notera que la disposition des points de l'index de la figure 2 en lignes et colonnes facilite le repérage, celles-ci définissant deux directions orthogonales x, y (figure 4), permettant d'orienter la carte autour de l'index considéré. Au surplus, la disposition des index les uns par rapport aux autres peut aussi fournir ce repérage : la disposition en damier des index 10 de la figure 4 définit encore les deux directions orthogonales x, y.

Les moyens informatiques associés à la carte comportent une mémoire de masse contenant une base de données et adressable à l'aide de l'index, une unité de traitement permettant d'interroger la base de données à l'aide d'un organe d'entrée tel qu'un clavier, et un organe d'affichage alpha-numérique. L'adressage pour disposer des informations correspondant à un index donné s'effectue à l'aide de moyens électro-optiques tels qu'un crayon de lecture à matrice de capteurs à couplage de charges ayant un champ dont le diamètre correspond généralement à peu près à trois fois la dimension du motif. Lorsque les motifs ont la constitution particulière décrite plus haute, le crayon peut avoir un champ de 5 millimètres de diamètre et comporter une optique de focalisation et une caméra CCD. L'unité de traitement est programmée de façon à effectuer un traitement morphologique simple de localisation, puis de décodage de l'index. L'unité de traitement peut être complétée par un interface de liaison avec un récepteur de système global de positionnement, disponible dans le commerce à l'heure actuelle et permettant de déterminer la position du récepteur à une dizaine de mètres près, par référence à la position de vingt-quatre satellites en orbite.

L'unité de traitement peut être prévue pour permettre l'adressage des données en mémoire par mots-clé ou par des questions types, de façon à permettre de lire la réponse à des questions, même complexes, telles que :
- nombre d'hôtels dans la ville désignée par l'index sur lequel le crayon est pointé,
- villes de plus de cinq mille habitants à moins de cent kilomètres par la route dans le département dont le crayon pointe la préfecture,
- cap à suivre depuis l'emplacement pointé sur la carte jusqu'à un autre emplacement, également pointé sur la carte où les données sont fournies à l'aide du clavier.

L'utilisation d'une encre sécuritaire, n'ayant pas de réponse dans le visible, permet d'imprimer les index sur la carte sans dégrader la lisibilité ni détériorer la localisation. Ces avantages ont peu d'intérêt dans le cas des zones homogènes de la carte, comme les espaces maritimes. Dans ces espaces, identifiés par une trame cyan, les index peuvent être imprimés, de façon répétitive ou non, à l'aide de motifs prévus sur la trame cyan, à la place de ceux inscrits en encre sécuritaire ou en addition à eux, par exemple pour fournir des indications proprement maritimes, telles que la bathymétrie. De façon plus générale, sur une carte ayant un fond d'image photographique, il suffit que la trame soit en simple incrustation photographique dans une teinte qui, si elle est visible, gêne le moins possible l'observation de l'image.

Les cartes nécessaires à la mise en oeuvre de l'invention peuvent être fabriquées par des procédés très variés, entre lesquels on choisira suivant l'application.

On peut répartir ces applications en trois grandes catégories.

Pour les applications professionnelles, telles que la préparation de mission, qui exigent en général une carte munie de renseignements propres à chaque mission particulière, la carte peut être constituée immédiatement avant la mission, à l'aide par exemple d'une imprimante à jet d'encre, à partir d'un extrait de base de données nécessaire à la mission, cette base étant stockée sur une mémoire à semi-conducteur.

La carte peut soit être réalisée par inscription des index à l'aide d'une imprimante à jet d'encre sécuritaire, sur une carte existante, soit être constituée sous forme simplifiée par extrait des données de la carte existante (constituée à partir de bases de données telles que celles de l'Institut Géographique National, du Service Hydrographique de la Marine, de l'Office National des Forêts, etc...), éditée avec la trame de localisation sur une imprimante à jet d'encre en plusieurs passages.

Pour les applications semi-professionnelles, par exemple pour les navigateurs, les données n'ont plus besoin d'être préparées pour une mission particulière mais distribuées par zones géographiques. Dans ce cas, la carte a simplement besoin d'être munie d'index. Les moyens informatiques associés constitueront notamment l'équivalent des instructions nautiques, des ouvrages donnant les marées, etc. L'association avec un récepteur de système global de positionnement ou GPS présente un intérêt particulier pour cette application.

Enfin, les applications de masse sont toutes celles liées au tourisme et au transport : elles permettent aux éditeurs de cartes, de guides et de plans, de substituer les moyens informatiques aux livres et elles permettent au surplus de diminuer la diversité des cartes et de développer la variété des informations sous forme thématique, par exemple en prévoyant des bases de données consacrées à la circulation routière, aux monuments historiques, aux points de vente, à l'hôtellerie.

Dans ce cas, les cartes peuvent être fabriquées de façon entièrement traditionnelle, si ce n'est que l'édition exige un cinquième typon, destiné à l'impression des index en encre sécuritaire.

Un exemple en grandeur réelle de carte tramée selon l'invention est représenté sur la figure 5 qui concerne un relevé cadastral. La trame de localisation, superposée aux motifs cartographiques constitués notamment par des rues, des contours de terrains, et des maisons, est composée d'index 10 disposés en damier recouvrant uniformément toute la carte, chacun apparaissant, à l'oeil nu, comme un seul point.

## Revendications

1. Système d'information géographique comprenant une carte portant une représentation graphique présentant une pluralité de motifs adjacents, et un moyen de lecture électro-optique **caractérisé en ce que** la représentation porte une image ou un texte, sur laquelle la pluralité de motifs adjacents sont superposés, chaque motif est constitué par un bloc de points (30) et **en ce que** le moyen de lecture électro-optique présente un champ d'analyse couvrant quelques motifs adjacents, le système comportant en outre une base de données adressable par lesdits moyens de lecture électro-optique, chacun desdits motifs constituant une clé d'accès à une information enregistrée dans ladite base de données.

2. Système selon la revendication 1, **caractérisé en ce que** les moyens de lecture électro-optique comprend un moyen d'éclairement de longueur d'onde sélectionnée pour isoler lesdits motifs.

3. Système selon la revendication 1, **caractérisé en ce que** chaque motif est constitué par un bloc de points (30) rectangulaire, séparé par des lignes vides et des espaces vides.

4. Système selon la revendication 1, **caractérisé en ce que** les points des motifs sont individuellement indiscernables à l'oeil nu et **en ce que** les motifs forment une trame en damier avec des vides séparant les motifs.

5. Carte portant une représentation graphique pour la mise en oeuvre dans un système d'information géographique conforme à l'une au moins des revendications précédentes, **caractérisé en ce que** la représentation portant une image ou un texte, sur laquelle une pluralité de motifs adjacents sont superposés, lesdits motif étant lisible par un moyen de lecture électro-optique, chaque motif étant constitué par un bloc de points (30) rectangulaire séparé par des lignes vides et des espaces vides, les motifs constituant des clés d'accès à une information enregistrées dans une base de données.

6. Carte portant une représentation graphique selon la revendication précédente, **caractérisé en ce que** lesdits motifs présentent une largeur d'un millimètre.

7. Carte portant une représentation graphique selon la revendication 5 ou 6, **caractérisé en ce que** lesdits motifs présentent une hauteur d'un millimètre.

## Claims

1. Geographic information system comprising a map bearing a graphical representation showing a plurality of adjacent patterns, and an electro-optic reading means **characterised in that** the representation bears an image or a text, on which the plurality of adjacent patterns are superimposed, each pattern is constituted of a block of points (30), and **in that** the electro-optic reading means has a field of analysis covering several adjacent patterns, the system further comprising a database addressable by said electro-optic reading means, each of said patterns constituting an access key to information saved in said database.

2. System according to claim 1, **characterised in that** the electro-optic reading means comprise a means for illumination at a selected wavelength in order to isolate said patterns.

3. System according to claim 1, **characterised in that** each pattern is constituted of a rectangular block of points (30), separated by empty lines and empty spaces.

4. System according to claim 1, **characterised in that** the points of the patterns are individually indiscernible to the naked eye and **in that** the patterns form a chequered frame with spaces separating the patterns.

5. Map bearing a graphical representation for implementation in a geographic information system in accordance with at least one of the preceding claims, **characterised in that** the representation bearing an image or a text, on which a plurality of adjacent patterns are superimposed, said patterns being readable by an electro-optic reading means, each pattern being constituted of a rectangular block of points (30) separated by empty lines and empty spaces, the patterns constituting access keys to information saved in a database.

6. Map bearing a graphical representation according to the preceding claim, **characterised in that** said patterns are one millimetre wide.

7. Map bearing a graphical representation according to claim 5 or 6, **characterised in that** said patterns are one millimetre high.

## Patentansprüche

1. Geografisches Informationssystem mit einer Karte, die eine grafische Darstellung trägt, welche eine Mehrzahl von aneinander angrenzenden Motiven aufweist, und einem elektrooptischen Lesemittel, **dadurch gekennzeichnet, dass** die Darstellung ein Bild oder einen Text trägt, auf welchem die Mehrzahl von aneinander angrenzenden Motiven übereinander angeordnet sind, jedes Motiv durch einen Punkteblock (30) gebildet wird, und dass das elektrooptische Lesemittel ein Analysefeld aufweist, welches einige aneinander angrenzende Motive abdeckt, wobei das System ferner eine Datenbank umfasst, die durch die elektrooptischen Lesemittel zugänglich ist, wobei jedes der Motive einen Zugangsschlüssel zu einer in der Datenbank registrierten Information bildet.

2. System nach Anspruch 1, **dadurch gekennzeichnet, dass** die elektrooptischen Lesemittel ein Mittel zur Beleuchtung mit ausgewählter langer Welle umfassen, um die Motive zu isolieren.

3. System nach Anspruch 1, **dadurch gekennzeichnet, dass** jedes Motiv durch einen rechtwinkligen Punkteblock (30) gebildet wird, der durch leere Zeilen und leere Räume separiert ist.

4. System nach Anspruch 1, **dadurch gekennzeichnet, dass** die Punkte der Motive einzeln vom bloßen Auge nicht wahrnehmbar sind und dass die Motive am Ende mit den die Motive trennenden Leerräumen ein Raster bilden.

5. Eine grafische Darstellung tragende Karte für den Einsatz in einem geografischen Informationssystem nach wenigstens einem der vorhergehenden Ansprüche, **dadurch gekennzeichnet, dass** die Darstellung ein Bild oder einen Text trägt, auf welchem eine Mehrzahl von aneinander angrenzenden Motiven übereinander angeordnet sind, wobei die Motive durch ein elektrooptisches Lesemittel lesbar sind, wobei jedes Motiv durch einen rechtwinkligen Punkteblock (30) gebildet wird, der durch leere Zeilen und leere Räume separiert ist, wobei die Motive Zugangsschlüssel zu einer in einer Datenbank registrierten Information bilden.

6. Eine grafische Darstellung tragende Karte nach dem vorhergehenden Anspruch, **dadurch gekennzeichnet, dass** die Motive die Breite eines Millimeters aufweisen.

7. Eine grafische Darstellung tragende Karte nach Anspruch 5 oder 6, **dadurch gekennzeichnet, dass** die Motive die Höhe eines Millimeters aufweisen.
